# EUROPEAN PATENT APPLICATION

(11) **EP 2 163 835 A2**
(43) Date of publication of application: **17.03.2010**
(21) Application number: 09154523.6
(22) Date of filing: 06.03.2009
(51) Int. Cl.: F24J 2/54

(54) **Sun tracing device**

(30) Priority: 12.09.2008 TW 97135137
(71) Applicant: Rainbow Technology Inc., Taoyuan County 330 (TW); Compound Solar Technology Corp., Hsinchu Science park Hsinchu (TW); Chain Energy Co. Ltd., Songshan District Taipei City 105 (TW)
(72) Inventor: Chang, Chin-Jung, 330, Taoyuan County (TW); Chiu, Rong-Chang, 330, Taoyuan County (TW); Li, Heng-Shing, 330, Taoyuan County (TW)
(74) Representative: 2K Patentanwälte Blasberg Kewitz & Reichel

(57) **Abstract**

A sun tracing device includes a power unit having an elevating element, a supporting plate carrying a photoelectric transformation unit, and an adjusting unit coupled to the power unit and the supporting plate. The power unit is used to lift/lower the adjusting unit, so that the adjusting unit can rotate and/or to lift/lower the supporting plate.

## Description

### BACKGROUND OF THE INVENTION

### Field of Invention

The present invention relates to a sun tracing device that can automatically return a risen solar panel back by a weight instead of extra forces.

### Related Art

As the global warming is getting serious, an industry, especially the solar energy industry, based on environment protection and energy saving has become popular. Since the solar energy industry shares similar materials and manufacturing properties with the matured semiconductor and panel industries, it has become the first choice for the high-tech companies that are interested in environment protection and energy saving, and have sufficient technology and human resources.

Other than the limitation of the materials used by the solar system, the solar energy can be easily restricted for its own properties. For example, by the different climate changes, different locations of the solar energy system, or different times, the conversion efficiency of the solar energy is greatly affected. Therefore, in the current technology, the sum tracing device may be built in the solar energy system for reducing the effects caused by these environmental factors, so that the solar panels in the solar energy system are able to trace the changing position of the sun, so as to help the solar panels absorb more of the lights.

However, the extra electricity or power must be inputted as the power source to the sun tracing device for driving the whole device so as to make the solar cell aim at the sun. In general, the solar energy system carrying the sun tracing device must consume about 5 to 15% of the generated power for driving the connected sun tracing device. Therefore, the number of the solar panels in the sun tracing device must be increased for compensating the power consumed by the sun tracing device.

Hence, it is a very important subject in the solar energy technology to provide an energy saving sun tracing device for enhancing the power efficiency of the entire solar energy system.

### SUMMARY OF THE INVENTION

In view of the foregoing, the present invention is to provide a sun tracing device, on which a solar panel can more accurately aim at the sun by an adjusting movement such as a rough adjustment (lifting/lowering) and a fine adjustment (rotating and/or slightly lifting/lowering).

The present invention is also to provide a sun tracing device including a photoelectric transformation unit. The sun tracing device of the present invention can be returned to an initial state from a rising state so as to effectively reduce the energy consumed by the sun tracing device, hence increase the overall electro-optic conversion efficiency of the photoelectric transformation unit.

The present invention is further to provide a sun tracing device utilizing the photoelectric sensing for omni-directionally driving a rough adjustment and a fine adjustment thereof, such that the sun tracing device can automatically trace the sun.

To achieve the above, the present invention is to provide a sun tracing device including a power unit having at least one elevating element, a supporting plate carrying a photoelectric transformation unit, and an adjusting unit coupled to the elevating element and the supporting plate. The power unit is used to lift/lower the adjusting unit that is used to change the tilt angle of the supporting plate.

The power unit is further connected to a containing unit substantially, and the power unit and the containing unit contain a fluid flowing between the power unit and the containing unit. Moreover, the power unit and/or the containing unit are further connected to an external power unit, so as to provide the power for driving the fluid from the containing unit to the power unit. Therefore, after the external power unit drives the fluid from the containing unit to the power unit, the fluid would have a higher energy. At this time, the weight of the sun tracing device may be transferred to a fluid with a higher energy by the elevating element of the power unit (e.g. led by the weight of the supporting plate, the solar panel, or other structures), so that the fluid can automatically flow back to the containing unit under the weight effect of the sun tracing device.

As described above, a sun tracing device of the present invention is used to lift or lower the height of the adjusting unit by the power unit, and is used to finely adjust the tilt angle of the supporting plate by the adjusting unit. For the energy conversion is performed by the flowing of the fluid, the sun tracing device can be returned to the initial state automatically by its own weight; thus, no extra force for the sun tracing device is needed in the sun tracing process. In addition, the sun tracing device of the present invention can be directionally adjusted according to the moving speed and the angle variation of the sun. Compared to the prior art, the sun tracing device of the present invention can gradually return the lifted power unit back to the initial position by its own weight effect (e.g. the weight of the supporting plate, solar panel, or other structures for pressing the power unit), such that no extra force have to be applied, hence the energy can be saved and the solar cell can accurately aim at the sun.

### BRIEF DESCRIPTION OF THE DRAWINGS

The invention will become more fully understood from the detailed description and accompanying drawings, which are given for illustration only, and thus are not limitative of the present invention, and wherein:

FIGS. 1A and 1B are schematic views of an initial structure of a sun tracing device in different view angles;

FIG. 2A and 2B are schematic views of a using structure of a sun tracing device in different view angles; and

FIG. 3A and 3B are schematic views of a final structure of a sun tracing device in different view angles.

### DETAILED DESCRIPTION OF THE INVENTION

The present invention will be apparent from the following detailed description, which proceeds with reference to the accompanying drawings, wherein the same references relate to the same elements.

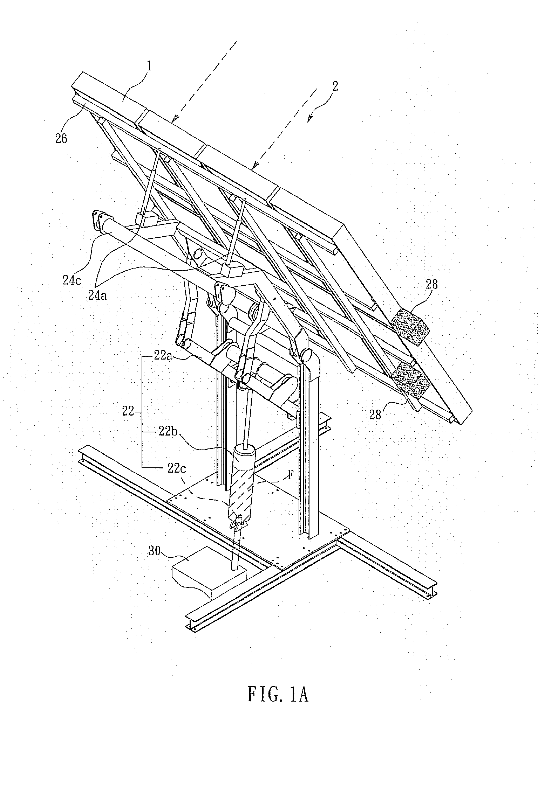

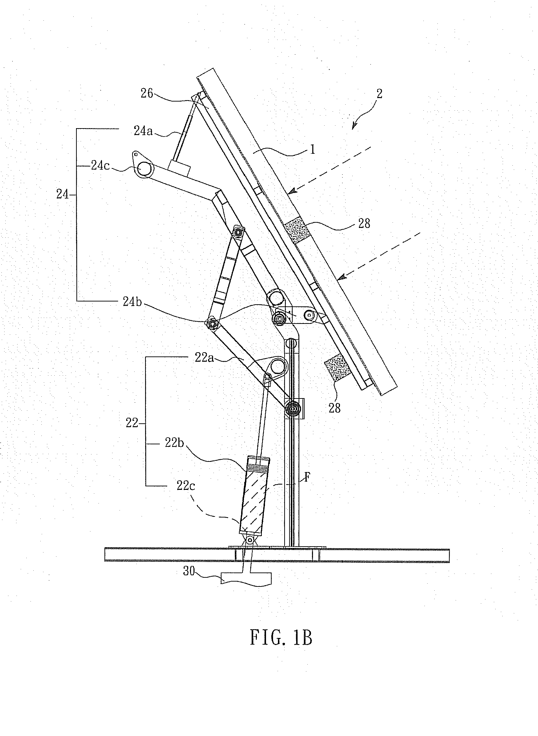

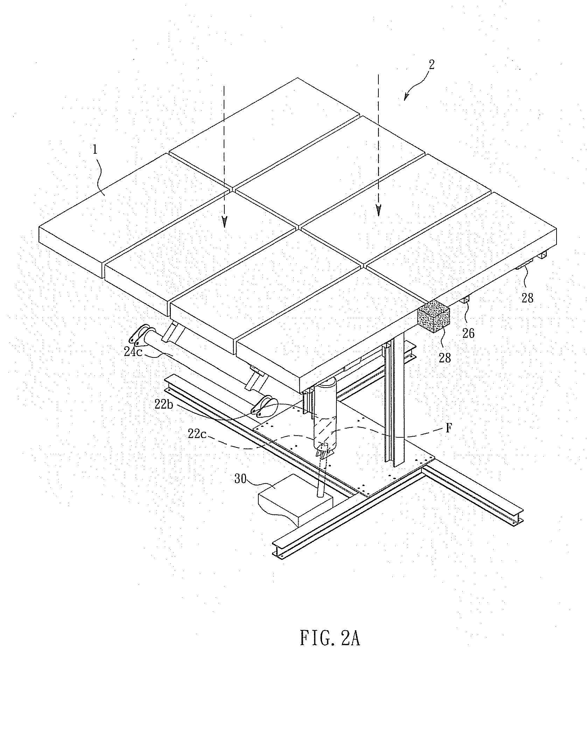

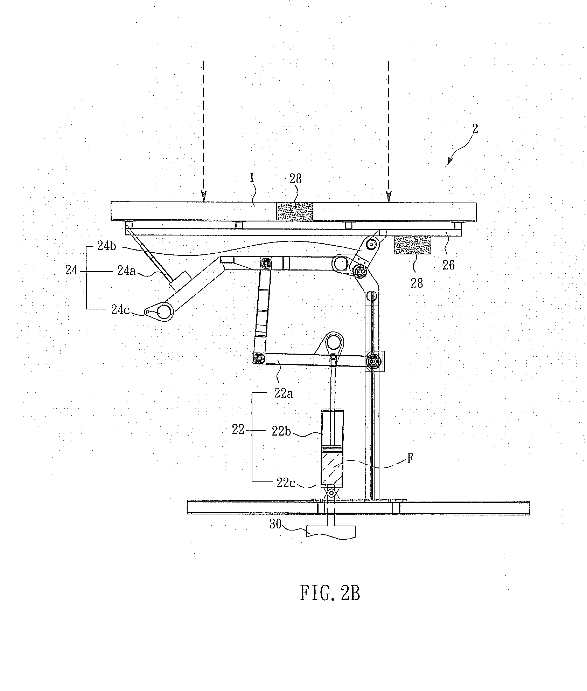

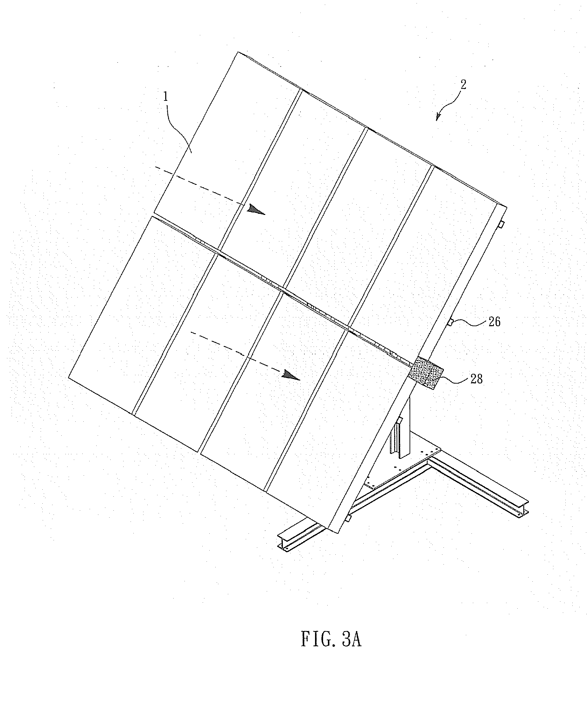

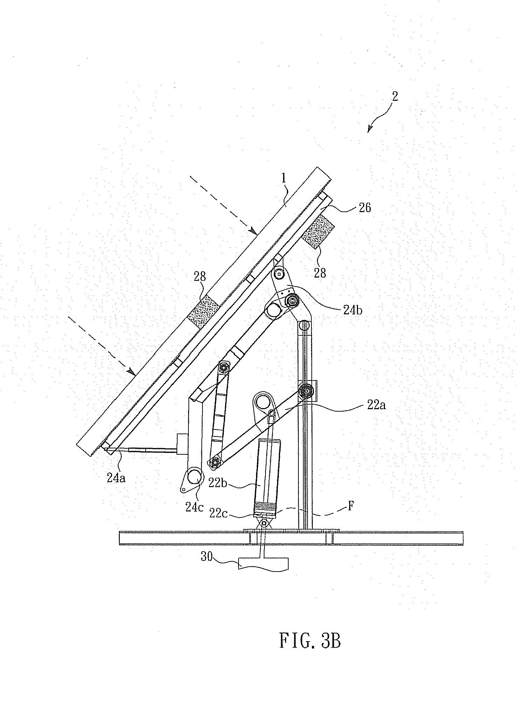

FIGS. 1A and 1B are schematic views of an initial structure of a sun tracing device 2 in the different view angles. FIG. 2A and 2B are schematic views of a using structure of a sun tracing device 2 in the different view angles. FIG. 3A and 3B are schematic views of a final structure of a sun tracing device 2 in the different view angles. With reference to FIGS. 1A, 1B, 2A, 2B, 3A, and 3B, these figures respectively disclose the structural schematic views of an initial state (e.g. at sunrise), a using state (e.g. in the noon), and a final state (e.g. in the evening) of a sun tracing device (carrying a photoelectric transformation unit 1) in the different view angles. The sun tracing device 2 that includes a power unit 22, a supporting plate 26 or supporting device (which is embodied e.g. as a supporting frame shown in Fig. 1A), and an adjusting unit 24 further has a sensing unit 28. The power unit 22 has at least one elevating element 22a, the supporting plate 26 carrying a photoelectric transformation unit 11 (e.g. a solar panel), and the adjusting unit 24 coupled to the elevating element 22a and the supporting plate 26. The power unit 22 may be used to lift or lower the adjusting unit 24 and the sensing unit 28 controls the adjusting unit 24 to rotate the supporting plate 26, so that the photoelectric transformation unit 11 on the supporting plate 26 may keep the optimal contact angle (e.g. perpendicular) with the sunray (shown as the arrow with dotted line).

More specifically, the power unit 22 is further connected to a containing unit 30 substantially, and the power unit 22 and the containing unit 30 have a fluid F flowing between the power unit 22 and the containing unit 30. In other words, the power unit 22 has a fluid vat 22b that is connected to the containing unit 30, such that the fluid F flows between the fluid vat 22b and the containing unit 30.

Moreover, the fluid F may be delivered from the containing unit 30 to the fluid vat 22b by an external force (e.g. a pump). However, if the fluid F is in the fluid vat 22, the fluid F can be pressed by the weight of the supporting plate 26 and the adjusting unit 24, or of other structures (i.e. weight effect) so that the fluid F automatically flows (e.g. leaking) from the fluid vat 22b to the containing unit 30.

As a matter of course, the above-mentioned fluid F may be liquid, gas, or the combination of both. To effectively control the flowing state (e.g. the speed and the flow rate) of the fluid F flowing from the fluid vat 22b to the containing unit 30, the flowing speed and the flow rate of the fluid F may further be controlled by a valve 22c (e.g. the throttle valve, three-way valve, ball valve, and control valve, etc) while leaking.

Additionally, the adjusting unit 24 further includes a connecting element 24c and at least three shaft arms 24a and 24b. The connecting element 24c is connected to the elevating element 22a of the power unit 22. The shaft arms 24a and 24b are coupled to the connecting element 24c and supporting plate 26. Each of the shaft arms 24a and 24b has at least one end located on the same plane and connected to a surface of the supporting plate 26. In other words, these ends of the shaft arms 24a and 24b, which are connected to the supporting plate 26, construct a co-planar structure. It is noted that a part of the shaft arms 24a is extensible and/or compressible and a part of the shaft arm 24b is fixedly held against the supporting plate 26. Therefore, when the position of the sun subtly varies with the seasons, the shaft arms 24a and 24b may adjust the lengths for finely adjusting the tilt angle of the supporting plate 26, such that the photoelectric transformation unit 1 on the supporting plate 26 can aim at the sun more accurately.

In addition, only three shaft arms 24a and 24b are illustrated as the examples in the embodiment. Two shaft arms 24a are extensible and/or compressible and another shaft arm 24b that is fixedly held against the supporting plate 26 has a rotatable shaft for flexibly rotating the supporting plate 26 after adjustment. In the embodiment, the adjustment and the rotation of the shaft arms 24a and the shaft arm 24b are used as the examples but not limited to these movements. Furthermore, the sun tracing device 2 of the present invention is not limited to the aspect of three shaft arms.

The above-mentioned sensing unit 28 is used to control the adjusting unit 24 for rotating the angle of the supporting plate 26. For example, the angle and the position of the sun vary with the changing of the seasons. In order to achieve the optimal electro-optic conversion efficiency of the photoelectric transformation unit 1, the optimal rotating angle of the supporting plate 26 at every time unit can be detected by the sensing unit 28, and the adjusting length of the shaft arm 24a and the tilt angle of the shaft arm 24b of the adjusting unit 24 are independently driven, such that the supporting plate 26 can aim at the angle of the sun more accurately.

Moreover, other than the above-mentioned power unit 22, the photoelectric transformation unit 1 can aim at the sunray by the sensing unit 28 controlling the adjustment and rotation of the three shaft arms 24a and 24b, so as to fine adjust the tilt angle of the supporting plate 26. To be specific, the sensing unit 28 may be disposed on the periphery and/or the back surface of the supporting plate 26 and/or the photoelectric transformation unit 1. In other words, the sensing unit 28 must be disposed on at least one periphery (e.g. the upward, downward, left, and right directions) and/or the back surface (e.g. the back surface of the photoelectric transformation unit 1 faces east) of the supporting plate 26 and/or photoelectric transformation unit 1, so as to omni-directionally sense the angle variation of the sunray. For instance, when the sensing unit 28 that has a plurality of sensors (not shown) is disposed on at least one periphery and back surface of the supporting plate 26 and the sunray emits to the photoelectric transformation unit 1, the sensor on the left side of the sensing unit 28 may sense the sunray; on the contrary, the sensor on the right side of the sensing unit 28 cannot sense the sunray. At this time the sensors on both the right and left sides drive the supporting plate 26 to tilt a specific angle, so as to keep the angle between the photoelectric transformation unit 1 and the sunray as optimal as possible. In addition, the sensing unit 28 disposed on the back surface of the supporting plate 26 and/or the photoelectric transformation unit 1 can sense the first sunray at sunrise, and thus enables the operation of the entire sun tracing device 2.

Additionally, although the above-mentioned sensing unit 28 with the plurality of sensors is used as the example, each sensing unit 28 may have a single sensor in practice; meanwhile, the above-mentioned sensing unit 28 may further be disposed on the plurality of peripheries of the supporting plate 26 and/or the photoelectric transformation unit 1.

The using states of the sun tracing device 2 of the present invention in different times are illustrated as follows. The structural aspects shown in FIGS. 1A, 1B, 2A, 2B, 3A, and 3B are used for illustration, but not to limit the scope of the present invention.

Firstly, FIGS. 1A and 1B are the structural views of the sun tracing device 2 in the initial state (at sunrise). In other words, since the sun rises from east at the start of the day, the supporting plate 26 on the sun tracing device 2 also faces east (i.e. the emitting direction of the sunray, shown as the arrow with the dotted line). At this time the sun tracing device 2 has not started working yet, so the fluid F of the sun tracing device 2 is in the containing unit 30, which means, the elevating element 22a of the power unit 22 is in the lowest position. As a matter of course, since the power unit 22 has not started working yet, the connected adjusting unit 24 does not work correspondingly.

However, after the sunrise, because the sensing unit 28 disposed on the back surface of the supporting plate 26 (or of the photoelectric transformation unit 1) will drive the sun tracing device 2 to start working after sensing the first sunray, the fluid F is delivered from the containing unit 30 to the fluid vat 22b of the power unit 22 by the external force. As more amount of the fluid F is delivered to the fluid vat 22b, the elevating element 22a is brought to a higher position until all fluid F is delivered to the fluid vat 22b. After that (at this time, stop providing the external force), the elevating element 22a is lifted to the highest position. Meanwhile, the connecting element 24c connected to the elevating element 22a is also lifted, and the three shaft arms 24a and 24b are lifted naturally with the supporting plate 26 connected to them.

As the fluid F in the fluid vat 22b is affected by the weight and flows to the containing unit 30 gradually, the elevating element 22a is lowered slowly and that will make the connecting element 24 and the three shaft arms 24a and 24b start working. Hence, as the sun is right above the sun tracing device 2, the structural views of the sun tracing device 2 in the using state (in the noon) are shown in FIGS. 2A and 2B. In order to aim the photoelectric transformation unit 1 on the supporting plate 26 at the sun, the part of the fluid F in the fluid vat 22b flows to the containing unit 30 at a proper speed under the control of the valve 22c. The supporting plate 26 is at a horizontal state for the elevating element 22a is lowered. To make the sunray has a preferable emitting angle as it emits to the photoelectric transformation unit 1 on the supporting plate 26, the sensing unit 28 disposed on the periphery of the supporting plate 26 may be used to activate the three shaft arms 24a and 24b, so as to fine adjust the tilt angle of the supporting plate 26.

Subsequently, FIGS. 3A and 3B are the structural views of the sun tracing device 2 in the final state (in the evening). Since the sun is in west at this time, the photoelectric transformation unit 1 on the supporting plate 26 faces west. However, because the fluid F in the fluid vat 22b almost flows to the containing unit 30 completely, the elevating element 22a of the power unit 22 has been returned to the lowest position gradually.

At last, after the fluid F in the fluid vat 22b has flowed to the containing unit 30 completely, the elevating element 22a of the power unit 22 is returned to the lowest position. At this time the sun has gone down, the sensing unit 28 is not able to sense the sunray hence the three shaft arms 24a and 24b in the adjusting unit 24 stop at the last position (i.e. the state that the photoelectric transformation unit 1 faces west as shown in FIGS. 3A and 3B). Until the sun rises again, the sensing unit 28 disposed on the back surface of the supporting plate 26 will receive the sunray, and the movements of the sun tracing device 2 will be activated (e.g. activating the external forces such as a pump for delivering the fluid F from the containing unit 30 to the fluid vat 22b).

In addition, the sun tracing device disclosed in the present invention further includes a wind power protection unit connected to the power unit and the adjusting unit, so that after the wind speed reaches a predetermined value, the sun tracing device can forcibly return the power unit and the adjusting unit back to the initial state. In other words, when the wind speed is so high that might damage the sun tracing device, the wind power protection unit will immediately leak out all of the fluid stored in the fluid vat to the containing unit, such that the elevating element is swiftly lowered down and forcibly return the adjusting unit and the supporting plate back to the initial state.

As the above-described photoelectric transformation unit is a solar panel, it may be a concentration solar panel or a flat solar panel. Because of specific design of the concentration solar panel, the angle between the sun and the concentration solar panel is quite important. However, the sun tracing device of the present invention can also satisfy the strict requirement of an angle error smaller than 0.5 degrees. Compared to the prior art, which can merely achieve an angle error of 1 degree, the sun tracing device of the present invention indeed has a relatively advantageous aiming effect, as well as a relatively apparent enhancement in electro-optic conversion efficiency.

As described above, a sun tracing device of the present invention lifts and lowers the adjusting unit through the weight unit, and fine adjusts the tilt angle of the supporting plate by the adjusting unit. In the weight unit, the fluid is gradually leaked to a lower position from a higher position by its own weight; hence in the whole sun tracing process, no extra force is needed. Meanwhile the flowing state (e.g. the speed and flow rate) of the fluid can be controlled by the valve, such that the sun tracing device can be directionally adjusted with the moving speed and angle variation of the sun.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A sun tracing device, comprising:
a power unit (22) having at least one elevating element (22a);
a supporting plate or supporting device (26) carrying a photoelectric transformation unit (11); and
an adjusting unit (24) connected to the elevating element and the supporting plate or supporting device, wherein the power unit is used to lift/lower the adjusting unit, and the adjusting unit changes a tilt angle of the supporting plate or supporting device.

2. The sun tracing device according to claim 1, wherein the power unit (22) is further connected (30) to a containing unit substantially, and the power unit and the containing unit contain a fluid flowing between the power unit and the containing unit.

3. The sun tracing device according to claim 2, wherein the power unit and/or the containing unit are further connected to an external power unit, and the external power unit provides a power for driving the fluid flowing from the containing unit to the power unit.

4. The sun tracing device according to claim 2 or 3, wherein the fluid is selected from liquid, gas, and their combination.

5. The sun tracing device according to any of claims 2 to 4, wherein a valve (22b) is disposed between the power unit (22) and the containing unit (30), and the valve controls a flowing state of the fluid flowing from the power unit to the containing unit.

6. The sun tracing device according to any of the preceding claims, wherein the adjusting unit further comprises:
a connecting element (24c) connected to the elevating element; and
at least three shaft arms (24a, 24b) coupled to the connecting element and the supporting plate or supporting device (26), wherein each of the shaft arms has at least one end located on the same plane and connected to a surface of the supporting plate or supporting device (26).

7. The sun tracing device according to claim 6, wherein the shaft arms (24a) are extensible and/or compressible.

8. The sun tracing device according to claim 6 or 7, wherein the movement of the shaft arms includes a linear movement or a rotation.

9. The sun tracing device according to any of the preceding claims, further comprising:
a wind protection unit connected to the power unit and the adjusting unit for forcibly enabling the power unit and the adjusting unit if a wind speed reaches a preset value.

10. The sun tracing device according to any of the preceding claims, further comprising:
a sensing unit (28) disposed on at least a periphery and/or a back surface of the supporting plate or supporting device (26) and/or the photoelectric transformation unit (11) for controlling the adjusting unit so as to activate the adjusting unit.

11. The sun tracing device according to claim 10, wherein the sensing unit is a photoelectric sensing unit (28).

12. The sun tracing device according to any of the preceding claims, wherein the photoelectric transformation unit is a solar panel.

13. The sun tracing device according to claim 12, wherein the solar panel is a concentrating solar panel or a flat solar panel.
